# EUROPÄISCHE PATENTANMELDUNG

(11) **EP 0 776 728 A1**
(43) Veröffentlichungstag der Anmeldung: **04.06.1997**
(21) Anmeldenummer: 96112224.9
(22) Anmeldetag: 29.07.1996
(51) Int. Cl.: B23Q 3/08, B23B 31/02, B23G 5/08, B23B 29/24

(54) **Kombinationswerkzeug**

(30) Priorität: 05.08.1995 DE 19528824
(71) Anmelder: Joh. & Ernst Link GmbH & Co. KG, D-70565 Stuttgart (DE)
(72) Erfinder:
(74) Vertreter: Kohl, Karl-Heinz

(57) **Zusammenfassung**

Das Kombinationswerkzeug hat eine Werkzeugaufnahme (1), die mit einer Antriebsspindel einer Bearbeitungsmaschine kuppelbar ist. Das Werkzeug hat ferner eine Aufnahme (12) für eine Klemmhalterung (2), die einen Schaft (10) eines Werkzeuges (5) aufnimmt und im Bereich ihrer Stirnseite mit einem Schneidenteil (3, 4) versehen ist. Damit das Kombinationswerkzeug eine hohe radiale Steifigkeit aufweist, ist die Klemmhalterung (2) durch Temperatureinwirkung fest mit der Werkzeugaufnahme (1) verbindbar sowie von ihr lösbar. Die Klemmhalterung (2) sitzt mit Schrumpfsitz in der Werkzeugaufnahme (1). Infolge der festen Verbindung hat das Kombinationswerkzeug eine große radiale Steifigkeit, so daß es insbesondere zum Fräsen hervorragend geeignet ist.

## Beschreibung

Die Erfindung betrifft ein Kombinationswerkzeug nach dem Oberbegriff des Anspruches 1.

Bei diesem Kombinationswerkzeug wird die Klemmhalterung, welche das Werkzeug aufnimmt, in der Werkzeugaufnahme mit einer Spannhülse hydraulisch gespannt.

Der Erfindung liegt die Aufgabe zugrunde, das gattungsgemäße Kombinationswerkzeug so weiter zu bilden, daß es eine hohe radiale Steifigkeit aufweist.

Diese Aufgabe wird beim gattungsgemäßen Kombinationswerkzeug erfindungsgemäß mit den kennzeichnenden Merkmalen des Anspruches 1 gelöst.

Die Klemmhalterung ist fest mit der Werkzeugaufnahme verbunden. Diese feste Verbindung kann dadurch erreicht werden, daß die Werkzeugaufnahme erhitzt wird. Dadurch weitet sich ihre Aufnahmeöffnung so stark auf, daß die Klemmhalterung einfach eingesetzt werden kann. Anschließend läßt man die Werkzeugaufnahme erkalten, wodurch sich die Aufnahmeöffnung zusammenzieht. Die Klemmhalterung sitzt dann mit Schrumpfsitz in der Werkzeugaufnahme. Um die Klemmhalterung wieder lösen zu können, muß die Werkzeugaufnahme so stark erhitzt werden, daß die Klemmhalterung aus der aufgeweiteten Aufnahmeöffnung herausgezogen werden kann. Infolge der festen Verbindung hat das erfindungsgemäße Kombinationswerkzeug eine große radiale Steifigkeit, so daß es insbesondere zum Fräsen hervorragend geeignet ist.

Bei entsprechendem Material der Werkzeugaufnahme ist es auch möglich, die Werkzeugaufnahme beispielsweise mit flüssigem Stickstoff so stark abzukühlen, daß die Aufnahmeöffnung aufgeweitet wird. Die Klemmhalterung kann dann leicht in die Werkzeugaufnahme gesteckt werden. Erwärmt sich die Werkzeugaufnahme wieder auf Raum- bzw. Umgebungstemperatur, verengt sich die Aufnahmeöffnung, so daß die Klemmhalterung fest in der Werkzeugaufnahme sitzt. Ein Wechsel oder Austausch der Klemmhalterung ist durch erneute Abkühlung der Werkzeugaufnahme möglich.

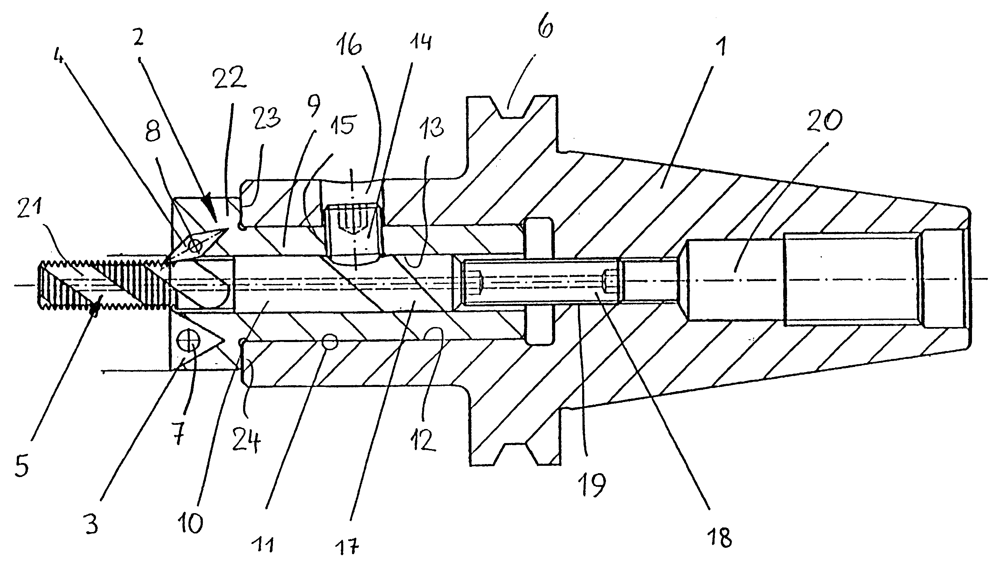

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt ein erfindungsgemäßes Kombinationswerkzeug im Axialschnitt.

Das Kombinationswerkzeug hat eine an sich bekannte Werkzeugaufnahme 1, mit der es mit einer Spindel einer Bearbeitungsmaschine in bekannter Weise verbunden wird. Die Werkzeugaufnahme 1 ist mit einer Greifernut 6 versehen, so daß das Kombinationswerkzeug in bekannter Weise von einem Greifersystem der Bearbeitungsmaschine für den Werkzeugwechsel erfaßt werden kann. Da die Werkzeugaufnahme 1 mit der Greifernut 6 bekannt ist, wird sie nicht näher erläutert.

Die Werkzeugaufnahme 1 ist als Schrumpfspannfutter ausgebildet, die eine Klemmhalterung 2 aufnimmt. In sie wird ein Werkzeug 5 eingesetzt, das im dargestellten Ausführungsbeispiel ein Gewindefräser ist. Er wird mit einem Einspannschaft 10 in die Klemmhalterung 2 eingesetzt und dort in noch zu beschreibender Weise gespannt. Es können unterschiedlich lange Gewindefräser 5 verwendet werden, um unterschiedlich lange Gewindebohrungen im Werkstück anzubringen.

Die Klemmhalterung 2 ist im Ausführungsbeispiel mit einer Planplatte 3 und einer Fasplatte 4 versehen. Beide Schneidplatten 3, 4 sind vorteilhaft als Wendeschneidplatten ausgebildet, die mit Schrauben 7, 8 lösbar an der Klemmhalterung 2 befestigt sind.

Die Klemmhalterung 2 hat einen Hülsenteil 9, der in eine entsprechende axiale Aufnahme 12 der Werkzeugaufnahme 1 ragt und in der Aufnahme 12 mit einem Schrumpfsitz 11 fest mit der Werkzeugaufnahme 1 verbunden ist. Der Schrumpfsitz kann durch Erhitzen oder Abkühlen der Werkzeugaufnahme in der beschriebenen Weise erzeugt werden.

Um das Werkzeug 5 in einer Aufnahme 13 der Klemmhalterung 2 festzuspannen, ist eine Klemmschraube 14 vorgesehen, die in einer radialen Gewindebohrung 15 des Hülsenteiles 9 der Klemmhalterung 2 gelagert ist. Die Werkzeugaufnahme 1 ist mit einer radialen Durchgangsöffnung 16 versehen, über welche die Klemmschraube 14 von außen zugänglich ist.

Die Klemmschraube 14 ragt in eine spiralig, als Nut ausgebildete Spannfläche 17, die im Einspannschaft 10 des Werkzeuges 5 vorgesehen ist. Durch Anziehen der Klemmschraube 14 wird das Werkzeug 5 in der Klemmhalterung 2 festgespannt.

In der Werkzeugaufnahme 1 ist ein Axialstellglied 18 untergebracht, das vorteilhaft als Schraube ausgebildet ist, die in einer axialen Gewindebohrung 19 der Werkzeugaufnahme 1 gelagert ist. Das Axialstellglied 18 ist innerhalb der Werkzeugaufnahme 1 zentrisch untergebracht und kann über eine axiale Bohrung 20 der Werkzeugaufnahme von außen mit einem entsprechenden Werkzeug betätigt werden.

Mit dem Axialstellglied 18 kann die axiale Auskragung des Werkzeuges 5 bei gelöster Klemmschraube 14 geändert werden. Die Steigung der Spannfläche 17 ist so gewählt, daß bei der Axialverstellung des Werkzeuges 5 die relative Lage der beiden Wendeschneidplatten 3, 4 zum Werkzeug 5 erhalten bleibt. Die Steigung der Spannfläche 17 entspricht der Steigung der Spannut 21 des Werkzeuges 5. Beim Verstellen des Axialstellgliedes 18 führt das Werkzeug 5 gleichzeitig eine axiale Verschiebebewegung und eine Rotationsbewegung um seine Achse aus, da infolge des Eingriffes der Klemmschraube 14 in die spiralige Spannfläche 17 das Werkzeug 5 eine Axialverstellung nur durch Drehen um seine Achse ausführen kann. Die Klemmschraube 14 ist hierbei selbstverständlich nur so weit gelockert, daß sie noch in die nutförmige Spannfläche 17 eingreift. Sobald die gewünschte Auskragung des Werkzeuges 5 erreicht ist, wird die Klemmschraube 14 angezogen, so daß das Werkzeug 5 in der Klemmhalterung 2 einwandfrei verspannt wird. Da das Axialstellglied 18 als Schraube ausgebildet ist, läßt sich das Werkzeug 5 stufenlos in die gewünschte Lage axial verstellen.

Das Werkzeug 5 ist vorteilhaft ein Vollhartmetallwerkzeug. Da es in der Klemmhalterung 2 eingespannt ist, die ihrerseits über den Schrumpfsitz 11 fest mit der Werkzeugaufnahme 1 verbunden ist, zeichnet sich dieses Kombinationswerkzeug durch eine große radiale Steifigkeit aus. Es ist daher besonders gut zum Fräsen geeignet. Selbstverständlich können in die Halterung 2 die unterschiedlichsten Werkzeuge, wie Bohrgewindefräser, Bohrer und dgl. eingesetzt werden. Das Kombinationswerkzeug zeichnet sich darüber hinaus durch seinen modularen Aufbau aus, wodurch die Anschaffungs- und Lagerhaltungskosten gering gehalten werden können.

Mit dem Kombinationswerkzeug können in einem Arbeitsgang mehrere Bearbeitungen vorgenommen werden. Mit dem axial über die Klemmhalterung 2 überstehenden Werkzeug 5 läßt sich eine Gewindebohrung anbringen. Mit der Fasplatte 4 kann am Werkstück im Bereich des Bohrungsrandes eine Fase angebracht werden. Mit der Planplatte 3 läßt sich anschließend am Werkstück eine Plansenkung vornehmen. Bei einer einfachen Ausführungsform ist die Klemmhalterung 2 mit nur einer einzigen Fasplatte 4 und nur einer einzigen Planplatte 3 versehen. Es ist selbstverständlich auch möglich, mehr als eine Plan- und/oder Fasplatte vorzusehen. Da die Schneidplatten 3, 4 als Wendeplatten ausgebildet sind, können sie bei Verschleiß der jeweils in Eingriff befindlichen Schneide gedreht werden, um eine noch ungenutzte Schneide in die Arbeitsposition zu bringen.

Die Klemmhalterung 2 hat einen Kopfteil 22, der größeren Durchmesser als der Hülsenteil 9 hat. Der Kopfteil 22 ist mit einer radialen Schulterfläche 23 versehen, mit welcher der Kopfteil 22 an der ebenen Stirnseite 24 der Werkzeugaufnahme 1 anliegt. Infolge der Anlage der Klemmhalterung 2 an der Stirnseite 24 der Werkzeugaufnahme 1 werden die beim Einsatz des Kombinationswerkzeuges auftretenden Axialkräfte zuverlässig in die Werkzeugaufnahme 1 übertragen.

Die Schneidplatten 3, 4 können je nach dem gewünschten Bearbeitungsvorgang unterschiedlich gestaltet sein. Es können einfache Werkzeuge 5 verwendet werden. Die Schneidplatten 3, 4 sind an der Klemmhalterung 2 vorgesehen. In ihr können unterschiedlich lange Werkzeuge 5 eingesetzt werden. Der Benutzer des Kombinationswerkzeuges benötigt nur eine Klemmhalterung für eine große Zahl unterschiedlicher Werkzeuge 5. Die Anschaffungs- und Lagerhaltungskosten können dadurch gering gehalten werden.

## Patentansprüche

1. Kombinationswerkzeug mit einer Werkzeugaufnahme, die mit einer Antriebsspindel einer Bearbeitungsmaschine kuppelbar ist und eine Aufnahme für eine Klemmhalterung aufweist, die einen Schaft eines Werkzeuges aufnimmt und im Bereich ihrer Stirnseite mit wenigstens einem Schneidenteil versehen ist,
dadurch gekennzeichnet, daß die Klemmhalterung (2) durch Temperatureinwirkung fest mit der Werkzeugaufnahme (1) verbindbar sowie von ihr lösbar ist.

2. Kombinationswerkzeug nach Anspruch 1,
dadurch gekennzeichnet, daß die Klemmhalterung (2) durch Erwärmen der Werkzeugaufnahme (1) von ihr lösbar ist.

3. Kombinationswerkzeug nach Anspruch 1,
dadurch gekennzeichnet, daß die Klemmhalterung (2) durch Abkühlen der Werkzeugaufnahme (1) von ihr lösbar ist.

4. Kombinationswerkzeug nach einem der Ansprüche 1 bis 3,
dadurch gekennzeichnet, daß der Schaft (10) des Werkzeuges (5) eine spiralig verlaufende Spannfläche (17) aufweist.

5. Kombinationswerkzeug nach Anspruch 4,
dadurch gekennzeichnet, daß die Steigung der Spannfläche (17) der Steigung einer Spannut (21) des Werkzeuges (5) entspricht.

6. Kombinationswerkzeug nach Anspruch 4 oder 5,
dadurch gekennzeichnet, daß die Spannfläche (17) Teil einer Nut im Schaft (10) des Werkzeuges (5) ist.

7. Kombinationswerkzeug nach einem der Ansprüche 1 bis 6,
dadurch gekennzeichnet, daß am Werkzeug (5) ein Axialstellglied (18) angreift.

8. Kombinationswerkzeug nach Anspruch 7,
dadurch gekennzeichnet, daß das Axialstellglied (18) eine in der Werkzeugaufnahme (1) gelagerte Schraube ist.

9. Kombinationswerkzeug nach einem der Ansprüche 4 bis 8,
dadurch gekennzeichnet, daß mit der Spannfläche (17) des Werkzeuges (5) eine in der Klemmhalterung (2) und/oder der Werkzeugaufnahme (1) gelagerte Klemmschraube (14) zusammenwirkt.

10. Kombinationswerkzeug nach einem der Ansprüche 1 bis 9,
dadurch gekennzeichnet, daß die Klemmhalterung (2) mit einem Kopfteil (22) an einer Stirnseite (24) der Werkzeugaufnahme (1) anliegt.
